(19) Europäisches Patentamt European Patent Office Office européen des brevets

(11) **EP 4 660 883 A1**

(12) **DEMANDE DE BREVET EUROPEEN**

(43) Date de publication:
**10.12.2025  Bulletin 2025/50**

(21) Numéro de dépôt: **25178333.8**

(22) Date de dépôt: **22.05.2025**

(51) Classification Internationale des Brevets (IPC):
**G06N 3/0499** (2023.01)  **G06N 3/084** (2023.01)
**G06N 3/09** (2023.01)  **G06N 3/126** (2023.01)

(52) Classification Coopérative des Brevets (CPC):
**G06N 3/126; G06N 3/0499; G06N 3/084;
G06N 3/09**

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité:  **03.06.2024  FR 2405806**

(71) Demandeur: **STMicroelectronics International
N.V.
1228 Plan-les-Ouates, Geneva (CH)**

(72) Inventeurs:
• **DEMAJ, Pierre
06200 Nice (FR)**
• **DOMINGUES DO AMARAL, Victor Felipe
06000 Nice (FR)**

(74) Mandataire: **Casalonga
Casalonga & Partners
Bayerstraße 71/73
80335 München (DE)**

(54) **PROCÉDÉ D ANALYSE ET D AJUSTEMENT D'UN RÉSEAU DE NEURONES ARTIFICIELS**

(57)    Selon un aspect, il est proposé un procédé, mis en œuvre par ordinateur, d'analyse d'un réseau de neurones artificiels déjà entraîné pour l'ajuster, le réseau de neurones artificiels comportant une succession de couches, chaque couche présentant un tenseur de paramètres, le procédé comprenant :
- une extraction (22) d'une information de Fisher pour chaque paramètre du réseau de neurones artificiels,
- un calcul (23) d'un indice pour chaque couche du réseau de neurones artificiels, cet indice étant représentatif des informations de Fisher calculés pour les paramètres de cette couche,
- une définition (24) d'une combinaison de couches à ajuster du réseau de neurones artificiels, la combinaison de couches étant définie à partir des indices de tenseur de paramètres des couches du réseau de neurones artificiels,
- une comparaison (25) entre l'occupation mémoire requise pour l'ajustement des paramètres de ladite combinaison de couches et un seuil maximal d'occupation mémoire.

[Fig. 2]

EP 4 660 883 A1

**Description**

Des modes de réalisation et de mise en œuvre concernent les réseaux de neurones artificiels et, plus particulièrement, l'ajustement ("fine tuning") de réseaux de neurones artificiels.

Les réseaux de neurones artificiels sont des modèles d'apprentissage automatique. Les réseaux de neurones artificiels comprennent généralement une succession de couches de neurones. Chaque couche prend en entrée des données auxquelles des poids sont appliqués et délivre en sortie des données de sortie après traitement par des fonctions d'activation des neurones de ladite couche. Ces données de sortie (également désignées par le terme « activations ») sont transmises à la couche suivante dans le réseau de neurones.

Les poids sont des paramètres de neurones configurables pour obtenir de bonnes données en sortie des couches. Les poids d'une couche sont définis dans un tenseur de poids.

Les poids sont ajustés lors d'une phase d'entraînement (également appelée « phase d'apprentissage »). Cet entraînement est généralement supervisé, notamment en exécutant le réseau de neurones à partir de données d'entrée déjà classifiées d'une base de données de référence. Cette phase d'entraînement permet d'obtenir un réseau de neurones entraîné.

Il est courant que les données acquises après déploiement d'un réseau de neurones artificiel soient sensiblement différentes de celles utilisées lors de son entraînement initial.

En effet, les données utilisées lors de l'entraînement peuvent ne pas être suffisamment représentatives des données prises en entrée du réseau de neurones artificiels après son déploiement. En effet, lorsque les données d'entraînement proviennent d'un contexte spécifique qui diffère significativement de celui rencontré lors de l'utilisation réelle, cela peut conduire à des écarts de performances notables. Ces écarts peuvent se manifester sous la forme de biais, d'une généralisation insuffisante ou d'une perte de précision.

En particulier, le réseau de neurones artificiels peut provenir d'une banque de réseaux de neurones artificiels. Un tel réseau de neurones artificiels peut être entraîné avec des données d'apprentissage générales. Ces données d'apprentissage générales peuvent ne pas être représentatives des données acquises dans l'environnement dans lequel le réseau de neurones artificiels sera déployé. Ainsi, la précision du réseau de neurones artificiels entraîné avec les données d'apprentissage générales peut être réduite.

Il est donc préférable d'ajuster les paramètres du réseau de neurones artificiels pour améliorer la précision du réseau de neurones artificiels. L'ajustement présente l'avantage d'éviter de réentraîner en totalité le réseau de neurones artificiels, en limitant l'entraînement à certains paramètres du réseau de neurones. En particulier, le réentraînement total n'est pas toujours possible, notamment lorsque le réentraînement est réalisé par un système informatique contraint en mémoire.

L'ajustement permet de réduire les besoins en mémoire et en capacité de calcul pour entraîner le réseau de neurones artificiels. Cela est particulièrement important lorsque l'ajustement du réseau de neurones artificiels est réalisé par le système informatique dans lequel le réseau de neurones artificiels est déployé. En effet, un tel système informatique peut avoir des capacités limitées en termes de consommation d'énergie, de mémoire et de calcul.

L'ajustement d'un réseau de neurones artificiels par un système informatique sur lequel ce réseau de neurones artificiels est déployé présente plusieurs avantages. Un tel ajustement permet d'éviter une communication des données acquises par ce système informatique vers l'extérieure de ce système informatique pour ajuster le réseau de neurones artificiels. Cela permet de réduire la consommation d'énergie du système informatique sur lequel le réseau de neurones artificiels est déployé tout en assurant une confidentialité sur les données acquises et sur le réseau de neurones artificiels ajusté.

Il est notamment possible d'autoriser l'ajustement de certains paramètres et de conserver la valeur de certains autres paramètres. Par exemple, l'ajustement du réseau de neurones artificiels peut chercher à ajuster les N dernières couches du réseau de neurones artificiels et de conserver les autres couches du réseau de neurones artificiels.

Toutefois, les couches du réseau de neurones artificiels peuvent avoir un impact variable sur les performances du réseau de neurones. Il n'est donc pas toujours pertinent de choisir d'ajuster les N dernières couches du réseau de neurones artificiels, notamment d'un point de vue de la précision du réseau de neurones artificiels ajusté et de l'occupation mémoire requise pour l'ajustement du réseau de neurones artificiels.

Ainsi, il est important de comprendre et d'analyser la contribution spécifique de chaque couche à la tâche générale du réseau de neurones. Identifier les couches qui sont cruciales pour la performance permet de concentrer les efforts de l'ajustement du réseau de neurones artificiels là où ils seront les plus bénéfiques. En optimisant ces couches stratégiques, on peut améliorer significativement les performances du réseau de neurones artificiels sans nécessiter un réentraînement complet.

La publication « On-Device training Under 256KB Memory », Ji Lin et al., 2022 décrit une méthode de mise à jour clairsemée (désignée en anglais par l'expression « Sparse update method ») pour déterminer les couches du réseau de neurones ayant le plus d'impact sur la sortie du réseau de neurones artificiels. En particulier, cette méthode permet d'extraire un gain en performance obtenu par chaque couche du réseau de neurones artificiels de manière à étudier la contribution de chaque couche dans la sortie du réseau de neurones artificiels.

Cette méthode présente comme inconvénients d'être complexe à mettre œuvre et de requérir une quantité de données importante pour l'ajustement d'un réseau de neurones artificiels.

Il existe donc un besoin de proposer une solution d'ajuster de manière simple et rapide un réseau de neurones artificiels entraîné.

Selon un aspect, il est proposé un procédé, mis en œuvre par ordinateur, d'analyse d'un réseau de neurones artificiels déjà entraîné pour l'ajuster, le réseau de neurones artificiels comportant une succession de couches, chaque couche présentant un tenseur de paramètres, le procédé comprenant :

- une extraction d'une information de Fisher pour chaque paramètre du réseau de neurones artificiels,
- un calcul d'un indice de tenseur de paramètres pour chaque couche du réseau de neurones artificiels, cet indice étant représentatif des informations de Fisher extraites des paramètres de cette couche,
- une définition d'une combinaison de couches à ajuster du réseau de neurones artificiels, la combinaison de couches étant définie à partir des indices de tenseur de paramètres des couches du réseau de neurones artificiels,
- une comparaison entre l'occupation mémoire requise pour l'ajustement des paramètres de ladite combinaison de couches et un seuil maximal d'occupation mémoire, et une modification de la combinaison de couches à ajuster si l'occupation mémoire requise pour l'ajustement des paramètres de ladite combinaison de couches est supérieure audit seuil maximal d'occupation mémoire.

L'information de Fisher permet d'évaluer de manière simple et rapide l'importance d'un paramètre sur la sortie du réseau de neurones artificiels. L'information de Fisher est ensuite utilisée pour définir un indice de tenseur de paramètres pour chaque couche du réseau de neurones artificiels. Cet indice permet d'évaluer l'impact de chaque couche sur la sortie du réseau de neurones artificiels afin de définir la combinaison de couches à ajuster.

L'information de Fisher peut être estimée à partir d'un faible nombre de données d'apprentissage. Cela permet d'éviter de fournir l'intégralité d'un jeu de données d'apprentissage pour l'analyse du réseau de neurones déjà entraîné.

Le fait de vérifier si l'occupation mémoire requise pour un ajustement d'une combinaison de couches est inférieure à un seuil d'occupation mémoire permet d'éviter de choisir une combinaison de couches pour laquelle un ajustement ne pourrait pas être réalisé à cause d'un dépassement du seuil d'occupation mémoire possible dans un système informatique ayant des ressources en mémoire limitées.

Avantageusement, l'indice d'un tenseur de paramètres d'une couche correspond à la moyenne des informations de Fisher associées aux paramètres de cette couche.

Dans un mode de mise en œuvre avantageux, la définition d'une combinaison de couches à ajuster comprend une recherche d'une combinaison de couches permettant d'optimiser la somme des indices des tenseurs de paramètres des couches de la combinaison de couches tout en respectant le seuil maximal d'occupation mémoire.

De préférence, la définition d'une combinaison de couches à ajuster comprend une mise en œuvre d'un algorithme d'optimisation configuré pour élaborer une combinaison de couches par itérations. La combinaison de couches à ajuster correspond alors à la dernière combinaison de couches définie au bout d'un nombre prédéfini d'itérations.

Dans un mode de réalisation avantageux, l'algorithme d'optimisation est configuré pour élaborer une combinaison de couches par itérations à partir :

- des indices des tenseurs de paramètres des couches du réseau de neurones artificiels,
- d'une fonction objectif correspondant à la somme des indices des tenseurs de paramètres de la précédente combinaison de couches définies,
- d'une fonction objectif correspondant à la différence entre le seuil maximal d'occupation mémoire et l'occupation mémoire requise pour l'ajustement de la précédente combinaison de couches définies.

Avantageusement, l'algorithme d'optimisation est un algorithme génétique de tri non dominé.

Avantageusement, l'occupation mémoire requise pour l'ajustement d'une combinaison de couches du réseau de neurones artificiels est évaluée à partir d'une taille des paramètres du réseau de neurones artificiels, d'une taille des données en sortie de chaque couche du réseau de neurones artificiels, de la quantité et de la taille des données d'apprentissage à utiliser pour l'ajustement et d'une indication sur l'utilisation d'un momentum pour ledit ajustement.

De préférence, le seuil maximal d'occupation mémoire est renseigné via une ligne de commande ou une interface graphique.

Dans un mode de mise en œuvre avantageux, la dernière combinaison de couches définie est stockée dans un fichier configuré pour être lu par un ordinateur pour réaliser un ajustement des paramètres des couches de ladite dernière combinaison de couches définie du réseau de neurones artificiels.

Selon un autre aspect, il est proposé un procédé d'ajustement d'un réseau de neurones déjà entraîné comprenant un ajustement des paramètres des couches d'une combinaison de couches définie par la mise en œuvre d'un procédé d'analyse tel que décrit précédemment.

Selon un autre aspect, il est proposé un procédé comprenant :

- un procédé d'analyse d'un réseau de neurones artificiels déjà entraîné tel que décrit précédemment, puis
- un procédé d'ajustement du réseau de neurones artificiels tel que décrit précédemment.

Selon un autre aspect, il est proposé un produit programme d'ordinateur comprenant des instructions qui, lorsque le programme est exécuté par un ordinateur, conduisent celui-ci à mettre en œuvre un procédé d'analyse d'un réseau de neurones déjà entraîné tel que décrit précédemment.

Selon un autre aspect, il est proposé un produit programme d'ordinateur comprenant des instructions qui, lorsque le programme est exécuté par un ordinateur, conduisent celui-ci à mettre en œuvre un procédé d'ajustement d'un réseau de neurones déjà entraîné tel que décrit précédemment.

Selon un autre aspect, il est proposé un système informatique comprenant :

- une mémoire dans laquelle sont stockés un réseau de neurones artificiels déjà entraîné à ajuster et un programme d'ordinateur tel que décrit précédemment pour l'analyse du réseau de neurones déjà entraîné,
- une unité de traitement configurée pour exécuter ledit programme d'ordinateur.

Selon un autre aspect, il est proposé un système informatique comprenant :

- une mémoire dans laquelle sont stockés un réseau de neurones artificiels déjà entraîné à ajuster et un programme d'ordinateur tel que décrit précédemment pour l'ajustement du réseau de neurones déjà entraîné,
- une unité de traitement configurée pour exécuter ledit programme d'ordinateur.

D'autres avantages et caractéristiques de l'invention apparaîtront à l'examen de la description détaillée de modes de réalisation, nullement limitatifs, et des dessins annexés sur lesquels :

[Fig 1]
[Fig 2]
[Fig 3]
[Fig 4]

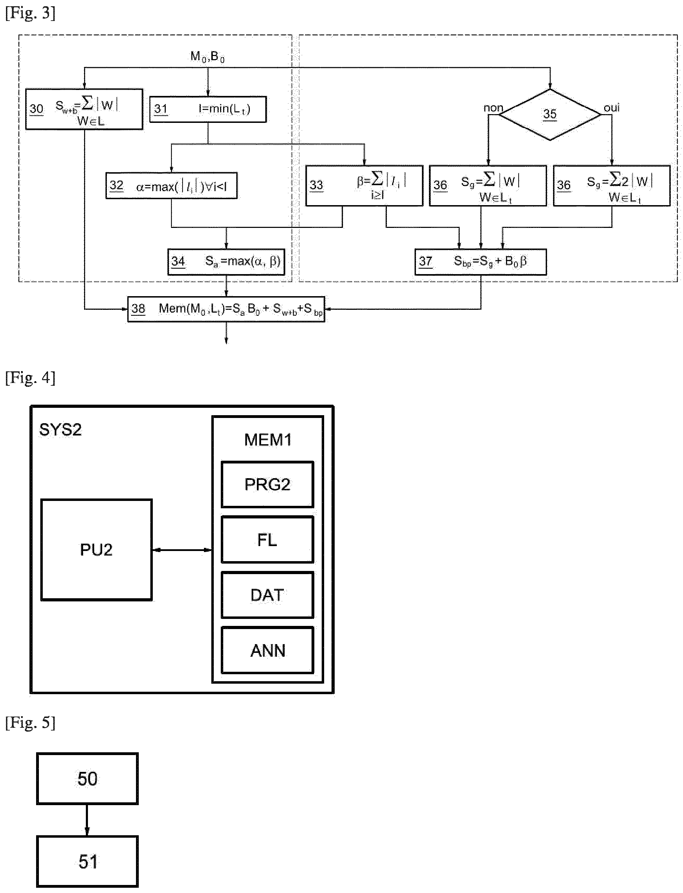

[Fig 5] illustrent des modes de réalisation et de mise en œuvre de l'invention.

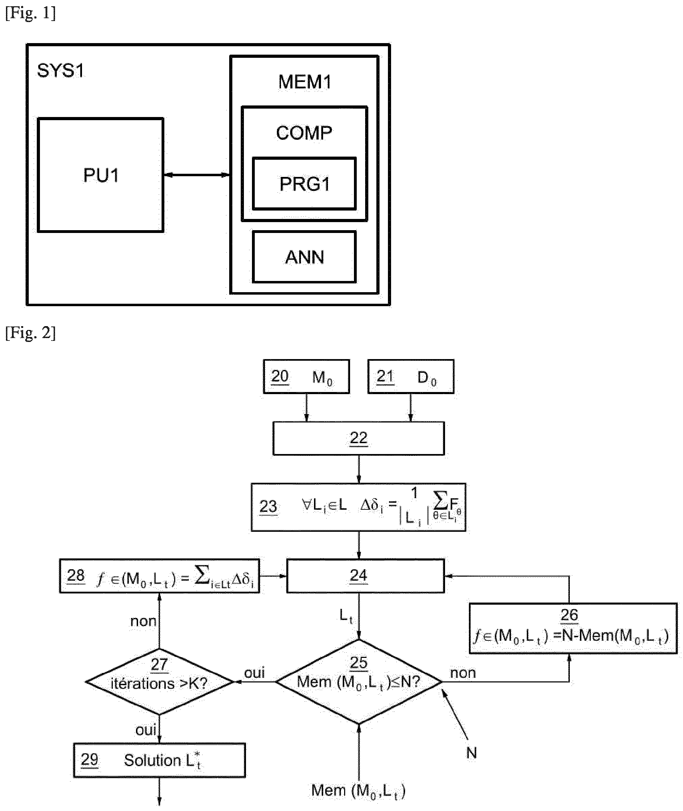

La figure 1 illustre un mode de réalisation d'un système informatique SYS1 configuré pour analyser un réseau de neurones artificiels. Un tel système informatique SYS1 peut être un ordinateur personnel ou bien un serveur par exemple.

Le système informatique comprend une unité de traitement SYS1 et une mémoire MEM1.

La mémoire MEM1 est configurée pour stocker un réseau de neurones artificiels ANN. Ce réseau de neurones artificiels ANN peut être un réseau de neurones artificiels déjà entraîné. Par exemple, le réseau de neurones artificiels peut être obtenu depuis une banque de réseau de neurones artificiels. En variante, le système informatique SYS1 est configuré pour entraîner le réseau de neurones artificiels.

La mémoire MEM1 comprend un logiciel COMP de compilation de réseaux de neurones. Le logiciel de compilation COMP est configuré pour analyser un réseau de neurones artificiels déjà entraîné ANN.

Le logiciel de compilation COMP comporte un programme d'ordinateur PRG1 comprenant des instructions qui, lorsque le programme PRG1 est exécuté par l'unité de traitement PU1 du système informatique SYS1, conduisent celle-ci à mettre en œuvre un procédé d'analyse d'un réseau de neurones artificiels tel que celui décrit dans la suite en relation avec la figure 2.

La figure 2 illustre un mode de mise en œuvre d'un procédé d'analyse d'un réseau de neurones artificiels.

Le procédé comprend une obtention 20 d'un réseau de neurones artificiels ANN pré-entraîné. En particulier, un tel réseau de neurones artificiels peut être pré-entraîné à partir de données d'apprentissage générale qui diffèrent des données qui seront traitées par le réseau de neurones artificiels une fois déployé. Le réseau de neurones artificiels peut être obtenu à partir d'une banque de réseau de neurones artificiels par exemple. Le réseau de neurones artificiels obtenu peut être stocké dans la mémoire MEM1 du système informatique SYS1.

Un réseau de neurones artificiels comprend plusieurs couches, chacune formée d'au moins un neurone, notamment d'une pluralité de neurones. La première couche du réseau de neurones artificiels est désignée comme couche d'entrée. Cette couche d'entrée est configurée pour recevoir les données prises en entrée du réseau de neurones artificiels. La dernière couche est désignée comme couche de sortie. Cette couche de sortie génère une sortie du réseau de neurones artificiels. Les couches intermédiaires entre la première couche et la dernière couche sont désignées comme couches cachées. Ces couches cachées comportent des neurones qui modifient les données grâce à des fonctions d'activation. La complexité et le nombre de ces couches cachées varient selon la nature du problème à résoudre.

Des poids et des biais sont définis comme paramètres du réseau de neurones artificiels pour chaque couche du réseau de neurones artificiels.

Les poids sont des coefficients qui définissent l'importance de chaque entrée de neurone. Ces poids sont ajustés durant la phase d'apprentissage pour réduire l'erreur de prédiction du réseau.

Les biais sont des valeurs ajoutées à la somme des entrées pour optimiser la réponse du neurone selon les données.

Les poids et biais sont stockés dans un tenseur de paramètres. Un tenseur de paramètres est une structure qui organise ses paramètres selon leur appartenance à une couche spécifique et à un neurone spécifique au sein de cette couche.

Le procédé comprend également une obtention 21 d'un jeu de données d'apprentissage pour l'ajustement du réseau de neurones artificiels. Ces données d'apprentissage sont représentatives des données qui seront traitées par le réseau de neurones artificiels une fois déployé. Ces données d'apprentissage peuvent être obtenus par un capteur disposé dans l'environnement dans lequel le réseau de neurones artificiels sera déployé. Le jeu de données d'apprentissage peut être constitué que d'une partie des données d'apprentissage qui seront utilisées pour l'ajustement du réseau de neurones artificiels.

Le procédé comprend ensuite une extraction 22 d'une information de Fisher pour chaque paramètre du réseau de neurones artificiels. En particulier, une information de Fisher est calculée pour chaque poids et chaque biais du réseau de neurones artificiels.

L'information de Fisher permet d'évaluer l'importance d'un paramètre sur la sortie du réseau de neurones artificiels. En particulier, pour un réseau de neurones artificiels et un paramètre donné de ce réseau de neurones artificiels, on désigne par $p_\theta(y|x)$ la fonction de vraisemblance conditionnelle de sortie du réseau de neurones artificiels, où $\theta$ est le paramètre du réseau de neurones, y est le vecteur de sortie du réseau de neurones artificiels, et x est le vecteur d'entrée du réseau de neurones artificiels. Cette probabilité de sortie peut être obtenue en exécutant le réseau de neurones plusieurs fois en faisant varier le vecteur d'entrée x pour une classe donnée et en faisant varier la classe de x pour obtenir l'espérance du vecteur de sortie y sachant x.

Dans ce cas, l'information de Fisher du paramètre peut être approximé par la formule mathématique suivante :

$$F_\theta = \mathbb{E}_x \mathbb{E}_{y \sim p_\theta(y|x)} (\nabla_\theta \log(p_\theta(y|x)))^2$$

, où $\mathbb{E}_x$ est l'espérance sur x, $\mathbb{E}_{y \sim p_\theta(y|x)}$ est l'espérance sur y distribué selon la fonction de vraisemblance conditionnelle $p_\theta(y|x)$, $\nabla_\theta \log(p_\theta(y|x))$ est le gradient du logarithme de vraisemblance conditionnelle par rapport au paramètre $\theta$.

L'information de Fisher peut être estimée à partir d'un faible nombre de données d'apprentissage. Cela permet d'éviter de fournir l'intégralité d'un jeu de données d'apprentissage.

Ensuite, le procédé comprend un calcul 23 d'un indice par tenseur de paramètres de chaque couche, cet indice étant représentatif des informations de Fisher extraites pour les paramètres de cette couche. Cette étape permet de réduire les informations de Fisher des paramètres du réseau de neurones artificiels à un indice pour chaque couche du réseau de neurones artificiels

En particulier, pour chaque couche du réseau de neurones artificiels, l'indice du tenseur de paramètres de cette couche est calculé. Cet indice peut être obtenu en effectuant une moyenne des informations de Fisher des paramètres de la couche. Ainsi, l'indice du tenseur d'une couche peut être obtenu en appliquant la formule mathématique suivante :

$$\Delta\delta_i = \frac{1}{|L_i|} \sum_{\theta \in L_i} F_\theta$$

, où $\Delta\delta_i$ est l'indice du tenseur de la couche $L_i$, $|L_i|$ correspond au nombre de paramètres dans la couche $L_i$, et $F_\theta$ est l'information de Fisher du paramètre $\theta$.

En variante, il est possible de calculer l'indice d'un tenseur de paramètres d'une couche par d'autres calculs. Par exemple, cet indice peut être obtenu en sommant les informations de Fisher des paramètres de la couche, ou bien en calculant une fonction « LogSumExp » (connue également par l'abréviation « LSE »).

Cet indice permet d'avoir une estimation de la corrélation entre les paramètres de la couche et la sortie du réseau de neurones artificiels.

Ainsi, l'indice du tenseur de paramètres d'une couche permet d'évaluer l'importance de la couche par rapport à la sortie du réseau de neurones artificiels, et donc d'évaluer l'intérêt d'ajuster cette couche. Cet indice permet d'évaluer l'impact de chaque couche sur la sortie du réseau de neurones artificiels. En particulier, plus une couche a un impact sur la sortie du réseau de neurones artificiels, plus son indice est élevé.

Par la suite, le procédé vise à chercher une combinaison de couches permettant d'optimiser la somme des indices des tenseurs de paramètres de ces couches tout en respectant une contrainte d'occupation mémoire pour l'ajustement des couches de cette combinaison. Le procédé permet de tester plusieurs combinaisons de couches. Les combinaisons de couches testées sont dites temporaires dans la suite. Le procédé comprend donc plusieurs itérations permettant de tester une combinaison de couches temporaire différente pour chaque itération. Le procédé comprend notamment une définition d'un nombre K maximal d'itérations.

Le procédé comprend ensuite une définition 24 d'une combinaison $L_t$ de couches temporaires. Ce jeu $L_t$ de couches temporaires peut être déterminé en exécutant un algorithme d'optimisation, notamment un algorithme évolutionnaire (en anglais « evolutionary algorithms »). L'algorithme d'optimisation peut notamment être un algorithme génétique de tri non dominé (désigné généralement par l'abréviation « NSGA-II » de l'anglais « Non-dominated Sorting Genetic Algorithm-II »). En variante, il est possible d'utiliser d'autres algorithme d'optimisation. Par exemple, il est possible d'utiliser un algorithme choisi parmi l'algorithme « NSGA-III » et l'algorithme « SPEA-2 » de l'anglais « Strength Pareto Evolutionary Algorithm 2 ». L'algorithme d'optimisation peut également être un algorithme d'optimisation combinatoire, tel que l'algorithme « Ant Colony » ou l'algorithme « Particle Swarn Optimization ».

Cet algorithme d'optimisation est configuré pour définir une combinaison de couches temporaire en choisissant des couches du réseau de neurones artificiels permettant de maximiser une somme des indices $\Delta\delta_i$ des tenseurs de paramètres des couches choisies, tout en évitant de dépasser un seuil d'occupation mémoire défini par l'utilisateur.

Le fait de vérifier si l'occupation mémoire requise pour un ajustement d'une combinaison de couches temporaire est inférieure à un seuil d'occupation mémoire permet d'éviter de choisir une combinaison de couches pour laquelle un ajustement ne pourrait pas être réalisé à cause d'un dépassement du seuil d'occupation mémoire possible dans un système informatique ayant des ressources en mémoire limitées.

La mise en œuvre d'un algorithme d'optimisation permet d'augmenter les chances de trouver une combinaison optimale de couches à ajuster.

Une fois une combinaison de couches temporaire définie par l'algorithme d'optimisation, le procédé comprend une évaluation de l'occupation mémoire pour un ajustement des couches choisies. L'évaluation de l'occupation mémoire est décrite dans la suite en relation avec la figure 3.

Ensuite, le procédé comprend une comparaison 25 de l'occupation mémoire pour l'ajustement des couches choisies avec le seuil d'occupation mémoire. Ce seuil d'occupation mémoire peut être renseigné par l'utilisateur via une ligne de commande ou une interface graphique.

Si l'occupation de la mémoire pour l'entraînement des couches choisies dépasse le seuil d'occupation mémoire, alors le procédé comprend une définition 26 d'une fonction objectif prenant en compte cette occupation mémoire.

Cette fonction objectif est définie par la formule mathématique suivante :

$$f(M_0, L_t) = N - Mem(M_0, L_t)$$

Le résultat de cette fonction objectif est pris en entrée de l'algorithme d'optimisation. De la sorte, l'algorithme d'optimisation va essayer de trouver une combinaison de couches temporaire pour lequel l'occupation mémoire de l'entraînement des couches choisies sera inférieur ou égale au seuil d'occupation mémoire.

Si à l'étape 25, l'occupation de la mémoire pour l'entraînement des couches choisies est inférieure ou égale au seuil d'occupation mémoire, alors le procédé comprend un test 27 permettant de vérifier si le nombre d'itérations de l'algorithme d'optimisation est supérieur au nombre K maximal d'itérations.

Si le nombre d'itérations de l'algorithme d'optimisation est inférieur ou égal au nombre K maximal d'itérations, alors le procédé comprend une définition 28 d'une fonction objectif prenant en compte l'indice des tenseurs de paramètres des couches de la combinaison $L_t$ de couches temporaire choisie.

Cette fonction objectif est définie par la formule mathématique suivante :

$$f(M_0, L_t) = \sum_{i \in L_t} \Delta\delta_i$$

Le résultat de cette fonction objectif est pris en entrée de l'algorithme d'optimisation. De la sorte, l'algorithme d'optimisation va essayer de trouver une combinaison de couches temporaire pour laquelle l'indice des tenseurs de paramètres des couches choisies est le plus élevé.

Si à l'étape 27, le nombre d'itérations de l'algorithme d'optimisation est supérieur au nombre K maximal d'itérations, alors le procédé comprend une définition 29 d'une combinaison de couches finale. Cette combinaison de couches finale correspond à la dernière combinaison de couches temporaire définit.

Cette combinaison de couches finale correspond alors à la combinaison de couches ayant un indice de tenseurs de paramètres le plus élevé parmi les jeux de couches temporaire testés, et pour lequel l'occupation en mémoire pour l'entraînement des couches choisies est inférieure au seuil défini par l'utilisateur.

En particulier, l'unité de traitement PU1 peut générer un fichier permettant d'indiquer les couches de la combinaison de couches finale. Ce fichier peut ensuite être utilisé pour l'ajustement du réseau de neurones artificiels.

La figure 3 illustre un procédé permettant d'estimer l'occupation mémoire pour l'ajustement des couches d'une combinaison de couches choisie par l'algorithme d'optimisation.

Le procédé prend en entrée le réseau de neurones artificiels ainsi que la taille de lot (en anglais « batch ») de données d'apprentissage pris en entrée du réseau de neurones artificiels. La taille de lot correspond au nombre d'échantillons de données d'apprentissage qui est pris en entrée du réseau de neurones artificiels pour calculer les gradients permettant de faire une mise à jour des paramètres du réseau de neurones (poids et biais).

Le réseau de neurones artificiels à utiliser et la taille de lot sont renseignés par l'utilisateur, via une ligne de commande ou par l'intermédiaire une interface graphique par exemple.

Le procédé comprend une estimation 30 de l'occupation mémoire de l'ensemble des paramètres du réseau de neurones artificiels.

L'occupation mémoire de l'ensemble des paramètres du réseau de neurones artificiels est estimée en appliquant la formule mathématique suivante :

$$S_{w+b} = \sum_{i\ in\ L} \dim(W_i).W_{datatype} + \dim(b_i).b_{\ datatype}, \text{ où } dim(W_i)$$

correspond au nombre de poids de la couche $L$, $W_{datatype}$ est le nombre de bits ou bytes servant à représenter un poids de la couche L, $dim(b_i)$ correspond au nombre de biais la couche $L$, et $b_{datatype}$ est le nombre de bits ou bytes servant à représenter un biais de la couche L.

Le procédé comprend également une obtention 31 de la couche qui est la plus profonde parmi la combinaison de couches définie par l'algorithme d'optimisation. Cette couche est obtenue en appliquant la formule mathématique suivante :

$I = \min(L_t)$, où $min(Lt)$ correspond à l'index le plus petit de la combinaison $L_t$ de couches temporaire, c'est-à-dire l'index de la couche la plus proche du début du réseau de neurones artificiels.

Ensuite le procédé comprend également une obtention 32 de la taille maximale des données de sorties des couches plus profondes que la couche I. Cette taille maximale est obtenue en appliquant la formule mathématique suivante :

$\alpha = \max(|l_i|)\ \forall i < I$, où $l_i$ correspond à la taille des données de sortie de la couche i.

Le procédé comprend également un calcul 33 de la somme des tailles des données de sortie de la couche I et des couches moins profondes que la couche I. Ainsi, cette somme est obtenue en appliquant la formule mathématique suivante :

$\beta = \sum_{i\geq I}|l_i|$, où $l_i$ est la taille des données de sortie de la couche *i.*

Le procédé comprend également une obtention 34 d'un pic d'occupation mémoire des données de sortie des couches du réseau de neurones. Ce pic d'occupation mémoire est obtenu en appliquant la formule mathématique suivante :

$$S_a = \max(\alpha, \beta)$$

Le procédé comprend également un test 35. Ce test 35 est configuré pour déterminer si un momentum est utilisé pour l'ajustement du réseau de neurones artificiels. Le momentum est une extension de l'algorithme d'optimisation de descente de gradient, bien connue de l'homme du métier. Le choix de l'utilisation d'un momentum repose sur l'utilisateur. L'utilisateur peut notamment indiquer s'il souhaite utiliser ou non un momentum via une ligne de commande ou bien par l'intermédiaire d'une interface graphique.

Ensuite le procédé comprend un calcul 36 de l'occupation mémoire des paramètres des couches de la combinaison de couches choisie par l'algorithme d'optimisation. Ce calcul dépend du résultat du test 35.

Si un momentum n'est pas utilisé pour réaliser l'ajustement, alors l'occupation mémoire des paramètres des couches de la combinaison de couches choisie est calculée en sommant les paramètres desdites couches. Ainsi, cette occupation mémoire est calculée selon la formule mathématique suivante :

$S_g = \sum_{WEL_t}|W|$, où $|W|$ correspond à la taille des paramètres de chaque couche de la combinaison de couches choisie.

Si un momentum est utilisé pour réaliser l'ajustement, alors l'occupation mémoire des paramètres des couches de la combinaison de couches choisie est calculée en sommant les paramètres desdites couches multipliés par deux. Ainsi, cette occupation mémoire est calculée selon la formule mathématique suivante :

$S_g = \sum_{WEL_t}2|W|$ où $|W|$ correspond à la taille des paramètres de chaque couche de la combinaison de couches choisie.

Ensuite, le procédé comprend un calcul 37 d'une occupation mémoire pour la rétropropagation effectuée lors de l'ajustement du réseau de neurones artificiel. Cette occupation est obtenue en multipliant la taille de lot des données d'apprentissage par la somme des données de sortie de la couche I et des couches moins profondes que la couche I, puis en additionnant le résultat de cette multiplication par l'occupation mémoire des paramètres des couches de la combinaison de couches choisie. Ainsi, l'occupation mémoire pour la rétropropagation est calculée selon la formule suivante :

$S_{bp} = S_g + B_0\beta$, où $B_0$ est la taille de lot de données d'apprentissage pris en entrée du réseau de neurones artificiels.

Le procédé comprend ensuite un calcul 38 de l'occupation mémoire pour l'ajustement des couches de la combinaison de couches choisie par l'algorithme d'optimisation. Cette occupation mémoire correspond à la somme de l'occupation mémoire pour parcourir le réseau de neurones artificiels et de l'occupation mémoire pour la rétropropagation lors de l'ajustement. Ainsi, l'occupation mémoire pour l'ajustement des couches de la combinaison de couches choisie par l'algorithme d'optimisation est calculée selon la formule suivante :

$$Mem(M_0, L_t) = S_a B_0 + S_{w+b} + S_{bp}$$

La figure 4 illustre un mode de réalisation d'un système informatique SYS2 configuré pour ajuster un réseau de neurones artificiels. Le système informatique SYS2 peut être un microcontrôleur, un ordinateur personnel ou un serveur par exemple.

Le système informatique SYS2 comporte une unité de traitement PU2 et une mémoire MEM2.

La mémoire MEM2 est configurée pour stocker un réseau de neurones déjà entraîné ANN à ajuster. Ce réseau de neurones artificiels ANN a déjà été analysé par la mise en œuvre d'un procédé d'analyse tel que décrit précédemment en relation avec la figure 2.

La mémoire MEM2 est également configurée pour stocker un fichier FL obtenu par la mise en œuvre du procédé d'analyse. Ce fichier indique la combinaison de couches finale à utiliser pour l'ajustement du réseau de neurones artificiels ANN. En variante, il est possible de stocker cette combinaison de couches dans le programme permettant de mettre en œuvre le réseau de neurones artificiels ANN.

La mémoire MEM2 est aussi configurée pour stocker un ensemble DAT de données d'apprentissage pour l'ajustement. En variante, cet ensemble DAT de données d'apprentissage peut être stocké sur un serveur distant. Cet ensemble de données d'apprentissage est différent du jeu de données d'apprentissage utilisé pour l'analyse du réseau de neurones artificiels. Le jeu de données d'apprentissage pour l'analyse du réseau de neurones artificiels peut être un sous-ensemble de données parmi l'ensemble des données d'apprentissage.

La mémoire MEM2 comprend également un programme d'ordinateur PRG2 comprenant des instructions qui lorsqu'elles sont exécutées par l'unité de traitement PU2, conduisent celle-ci un procédé d'ajustement du réseau de neurones artificiels.

La figure 5 illustre un mode de mise en œuvre d'un procédé d'ajustement d'un réseau de neurones artificiels déjà entraîné ANN pouvant être mis en œuvre par le système informatique SYS2.

Le procédé comprend une obtention 50 du réseau de neurones artificiels ANN et d'un fichier FL indiquant la combinaison de couches finale à utiliser pour l'ajustement, ainsi qu'un ensemble DAT de données d'apprentissage pour l'ajustement.

Le procédé comprend ensuite un ajustement 51 des paramètres des couches de ladite combinaison de couches finale à partir du jeu de données d'apprentissage. L'ajustement de ces paramètres est réalisé en effectuant un nouvel entraînement du réseau de neurones artificiels. Dans ce nouvel entraînement, seuls les paramètres des couches de la combinaison de couches finale définie dans le fichier FL peuvent être modifiés, les valeurs des autres paramètres restent les mêmes.

Cet ajustement permet d'obtenir un réseau de neurones artificiels ajustés dont les performances sont améliorées par rapport au réseau de neurones artificiels déjà entraîné initial.

**Revendications**

1. Procédé, mis en œuvre par ordinateur, d'analyse d'un réseau de neurones artificiels déjà entraîné pour l'ajuster, le réseau de neurones artificiels comportant une succession de couches, chaque couche présentant un tenseur de paramètres, le procédé comprenant :

   - une extraction (22) d'une information de Fisher pour chaque paramètre du réseau de neurones artificiels,
   - un calcul (23) d'un indice de tenseur de paramètres pour chaque couche du réseau de neurones artificiels, cet indice étant représentatif des informations de Fisher extraites des paramètres de cette couche,
   - une définition (24) d'une combinaison de couches à ajuster du réseau de neurones artificiels, la combinaison de couches étant définie à partir des indices de tenseur de paramètres des couches du réseau de neurones artificiels,
   - une comparaison (25) entre l'occupation mémoire requise pour l'ajustement des paramètres de ladite combinaison de couches et un seuil maximal d'occupation mémoire, et une modification de la combinaison de couches à ajuster si l'occupation mémoire requise pour l'ajustement des paramètres de ladite combinaison de couches est supérieure audit seuil maximal d'occupation mémoire.

**2.** Procédé selon la revendication 1, dans lequel l'indice d'un tenseur de paramètres d'une couche correspond à la moyenne des informations de Fisher associées aux paramètres de cette couche.

**3.** Procédé selon la revendication 2, dans lequel la définition (24) d'une combinaison de couches à ajuster comprend une recherche d'une combinaison de couches permettant d'optimiser la somme des indices des tenseurs de paramètres des couches de la combinaison de couches tout en respectant le seuil maximal d'occupation mémoire.

**4.** Procédé selon l'une quelconque des revendications 2 ou 3, dans lequel la définition (24) d'une combinaison de couches à ajuster comprend une mise en œuvre d'un algorithme d'optimisation configuré pour élaborer une combinaison de couches par itérations, et dans lequel la combinaison de couches à ajuster correspond à la dernière combinaison de couches définie au bout d'un nombre prédéfini d'itérations.

**5.** Procédé selon la revendication 4, dans lequel l'algorithme d'optimisation est configuré pour élaborer une combinaison de couches par itérations à partir :

- des indices des tenseurs de paramètres des couches du réseau de neurones artificiels,
- d'une fonction objectif correspondant à la somme des indices des tenseurs de paramètres de la précédente combinaison de couches définies,
- d'une fonction objectif correspondant à la différence entre le seuil maximal d'occupation mémoire et l'occupation mémoire requise pour l'ajustement de la précédente combinaison de couches définies.

**6.** Procédé selon la revendication 5, dans lequel l'algorithme d'optimisation est un algorithme génétique de tri non dominé.

**7.** Procédé selon l'une des revendications 2 à 6, dans lequel l'occupation mémoire requise pour l'ajustement d'une combinaison de couches du réseau de neurones artificiels est évaluée à partir d'une taille des paramètres du réseau de neurones artificiels, d'une taille des données en sortie de chaque couche du réseau de neurones artificiels, de la quantité et de la taille des données d'apprentissage à utiliser pour l'ajustement et d'une indication sur l'utilisation d'un momentum pour ledit ajustement.

**8.** Procédé selon l'une des revendications 2 à 7, dans lequel le seuil maximal d'occupation mémoire est renseigné via une ligne de commande ou une interface graphique.

**9.** Procédé selon l'une des revendications 2 à 8 dans laquelle la dernière combinaison de couches définie est stockée dans un fichier configuré pour être lu par un ordinateur pour réaliser un ajustement des paramètres des couches de ladite dernière combinaison de couches définie du réseau de neurones artificiels.

**10.** Procédé d'ajustement d'un réseau de neurones déjà entraîné comprenant un ajustement des paramètres des couches d'une combinaison de couches définie par la mise en œuvre d'un procédé d'analyse selon l'une des revendications 1 à 9.

**11.** Produit programme d'ordinateur comprenant des instructions qui, lorsque le programme est exécuté par un ordinateur, conduisent celui-ci à mettre en œuvre un procédé d'analyse selon l'une des revendications 1 à 9.

**12.** Produit programme d'ordinateur comprenant des instructions qui, lorsque le programme est exécuté par un ordinateur, conduisent celui-ci à mettre en œuvre un procédé d'ajustement selon la revendication 10.

**13.** Système informatique comprenant :

- une mémoire (MEM1) dans laquelle sont stockés un réseau de neurones artificiels déjà entraîné à ajuster et un programme d'ordinateur (PRG1) selon la revendication 11 pour l'analyse du réseau de neurones déjà entraîné,
- une unité de traitement (PU1) configurée pour exécuter ledit programme d'ordinateur.

**14.** Système informatique comprenant :

- une mémoire (MEM2) dans laquelle sont stockés un réseau de neurones artificiels déjà entraîné à ajuster et un programme d'ordinateur (PRG2) selon la revendication 12 pour l'ajustement du réseau de neurones déjà entraîné,

- une unité de traitement (PU2) configurée pour exécuter ledit programme d'ordinateur.

[Fig. 1]

SYS1

PU1 ↔ MEM1

COMP

PRG1

ANN

[Fig. 2]

$$\underline{20} \quad M_0$$

$$\underline{21} \quad D_0$$

$$\underline{22}$$

$$\underline{23} \quad \forall L_i \in L \quad \Delta\delta_i = \frac{1}{|L_i|} \sum_{\theta \in L_i} F_\theta$$

$$\underline{28} \quad f \in (M_0, L_t) = \sum_{i \in Lt} \Delta\delta_i$$

$$\underline{24}$$

$$\underline{26} \quad f \in (M_0, L_t) = N - Mem(M_0, L_t)$$

non

$L_t$

$$\underline{27} \quad \text{itérations} > K?$$

oui

$$\underline{25} \quad Mem(M_0, L_t) \leq N?$$

non

N

oui

$$\underline{29} \quad \text{Solution } L_t^*$$

$$Mem(M_0, L_t)$$

[Fig. 3]

$M_0, B_0$

30  $S_{w+b} = \sum_{W \in L} |W|$

31  $I = \min(L_t)$

35  non / oui

32  $\alpha = \max(|I_i|) \forall i < I$

33  $\beta = \sum_{i \geq I} |I_i|$

36  $S_g = \sum_{W \in L_t} |W|$

36  $S_g = \sum_{W \in L_t} 2|W|$

34  $S_a = \max(\alpha, \beta)$

37  $S_{bp} = S_g + B_0 \beta$

38  $Mem(M_0, L_t) = S_a B_0 + S_{w+b} + S_{bp}$

[Fig. 4]

SYS2

MEM1

PRG2

PU2

FL

DAT

ANN

[Fig. 5]

50

51

Europäisches
Patentamt

European
Patent Office

Office européen
des brevets

**RAPPORT DE RECHERCHE EUROPEENNE**

Numéro de la demande

EP 25 17 8333

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | YOUNG D KWON ET AL: "TinyTrain: Deep Neural Network Training at the Extreme Edge", ARXIV.ORG, CORNELL UNIVERSITY LIBRARY, 201 OLIN LIBRARY CORNELL UNIVERSITY ITHACA, NY 14853, 19 juillet 2023 (2023-07-19), XP091567138, * page 1 - page 6 * | 1-14 | INV. G06N3/0499 G06N3/084 G06N3/09 G06N3/126 |
| A | PANAGANT NATEE ET AL: "A Comparative Study of Recent Multi-objective Metaheuristics for Solving Constrained Truss Optimisation Problems", ARCHIVES OF COMPUTATIONAL METHODS IN ENGINEERING, SPRINGER NETHERLANDS, DORDRECHT, vol. 28, no. 5, 16 janvier 2021 (2021-01-16), pages 4031-4047, XP037528499, ISSN: 1134-3060, DOI: 10.1007/S11831-021-09531-8 [extrait le 2021-01-16] * abrégé * * 1, 3, 4 * | 1-14 | |
| A | TAHA VALIZADEHASLANI ET AL: "LayerNorm: A key component in parameter-efficient fine-tuning", ARXIV.ORG, CORNELL UNIVERSITY LIBRARY, 201 OLIN LIBRARY CORNELL UNIVERSITY ITHACA, NY 14853, 29 mars 2024 (2024-03-29), XP091714259, * page 1 - page 8 * | 1-14 | |

**DOMAINES TECHNIQUES RECHERCHES (IPC)**

G06N

Le présent rapport a été établi pour toutes les revendications

| Lieu de la recherche | Date d'achèvement de la recherche | Examinateur |
|---|---|---|
| La Haye | 29 juillet 2025 | Keresztury, Bence |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................................
& : membre de la même famille, document correspondant

EPO FORM 1503 03.82 (P04C02)

# EP 4 660 883 A1

**Littérature non-brevet citée dans la description**

- **JI LIN et al.** *On-Device training Under 256KB Memory*, 2022